# EUROPEAN PATENT APPLICATION

(11) **EP 1 583 336 A2**
(43) Date of publication of application: **05.10.2005**
(21) Application number: 05015028.3
(22) Date of filing: 21.06.2004
(51) Int. Cl.: H04M 1/725, G06F 17/24

(54) **Mobile terminal and key operation method capable of restoring operation environment**

(30) Priority: 30.06.2003 JP 2003186869
(62) Divisional of application: 04014499.0
(71) Applicant: NEC CORPORATION, Tokyo (JP)
(72) Inventor: Kashima, Miki, Minato-ku, Tokyo (JP)
(74) Representative: Glawe, Delfs, Moll

(57) **Abstract**

A control circuit (6) sets, as one piece of history data, information including the type of an input key for an operation for inputting data by the key each time of an operation of an arbitrary key from an idle screen, and stores the history data into an operation environment storing unit (13) in a memory. If interrupting the operation for inputting the data by the key due to any processing, an undo key (14) is pressed and then the control circuit (6) sequentially executes the history data stored in the operation environment storing unit (13) in the order of the old history data, thereby restoring a screen just before the interrupt. The operation environment storing unit (13) stores, as one piece of the history data, image data or text data made by the operation for inputting the data by the key.

## Description

### BACKGROUND OF THE INVENTION

### 1. Field of the Invention

The present invention relates to a mobile terminal and a key operation method capable of restoring an operation environment, and more particularly, to a mobile terminal and a key operation method capable of restoring an operation environment just before interrupt upon interrupt processing or erroneous end processing during an operation using an input key of the mobile terminal.

### 2. Description of the Related Art

Japanese Patent Laid-Open No. 02-192349 (to be referred to as a document 1 hereinafter) discloses a conventional method for canceling data which is erroneously inputted during dial input. As disclosed in the document 1, cancel instructing means can automatically disconnect and reconnect a line and an on/off hook operation of a phone for the disconnection of line is omitted. Further, the erroneously-inputted dial number is displayed on a display unit and a phone number is transmitted again to the line while correcting the erroneously-inputted number.

However, the above-mentioned method for correcting the erroneous input relates to a method for correcting the erroneous input of the phone number, and the document 1 does not disclose a method for restoring (or undoing) an e-mail sentence on a screen after erroneously or accidentally ending an operation for inputting or displaying the e-mail sentence. Therefore, the above-mentioned technology has such a problem that the e-mail sentence that was being created just before is not restored on the screen when a user erroneously or accidentally ends the e-mail.

In particular, there are currently a variety of functions in a mobile terminal, and one function is interrupted by other function in many cases. For example, the data receiving or data incoming operation interrupt the operation upon making an e-mail or browsing a site on the Internet. The user performs an interrupt operation by a screen operation in accordance with the interrupt and ends it, and thereafter he desires to restore to the previous e-mail or browsing operation on the screen. In this case, when the user desires to restore a state of the mobile terminal to the previous state before the interrupt operation, the data at the previous state does not exist. Therefore, there is such a problem that the mobile terminal does not restore the original state.

### SUMMARY OF THE INVENTION

In order to solve the above-mentioned problems, it is an object of the present invention to restore an operation environment just before the interrupt processing and erroneous end processing by temporarily storing information on the operation environment of a mobile terminal.

Further, in order to solve the above-mentioned problems, according to the first aspect of the present invention, there is provided a mobile terminal for outputting a desired result by user' s key operation from an idle screen. The mobile terminal includes: (1) key input storing means which sequentially stores information including the type of a pressed input key as one piece of history data each time for executing the pressed key input; and (2) restoring means which restores an operation environment before interrupt based on the history data stored by the key input storing means, when the operation is interrupted before outputting the desired result by executing the key input and the idle screen is undone and then a specific key is pressed.

According to the second aspect of the present invention, there is provided a mobile terminal for outputting a desired result by user' s key operation from an idle screen. The mobile terminal includes: (3) key input storing means which sequentially stores screen information after switching a screen as one piece of history data each time for pressing an input key for switching the screen; and (4) restoring means which restores an operation environment before interrupt based on the history data stored by the key input storing means, when the operation is interrupted before outputting the desired result by executing the key input and the idle screen is undone and then a specific key is pressed.

According to the third aspect of the present invention, there is provided a mobile terminal for outputting a desired result by user' s key operation from an idle screen. The mobile terminal includes: (5) key input storing means which sequentially stores screen information after switching a screen as one piece of history data each time for pressing an input key for switching the screen; and (6) restoring means which traces operation environments one by one and restores the operation environment before interrupt based on history data stored by the key input storing means each time for pressing a specific key when the operation is interrupted before outputting the desired result by executing the key input and the idle screen is undone.

Further, the mobile terminal according to any one of the firstto thirdaspectsfurtherhas:operationenvironment storing means which assumes, as one operation environment, a series of the history data executed during displaying the idle screen every idle screen, sets the one operating environment as one piece of processing data, and stores a plurality of pieces of the processing data. The restoring means allows the operation environment storing means to select one of a plurality of pieces of the stored processing data and restores the operation, environment based on the selected processing data.

Furthermore, in the mobile terminal according to the second or third aspect, the history data includes character information and/or number information as a key input.

In addition, in the mobile terminal according to the first aspect, the history data includes text data which is made by a key input.

In addition, in the mobile terminal according to any one of the first to third aspects, the history data includes image data.

According to the fourth aspect of the present invention, there is provided a key operation method for outputting a desired result by user's key operation from an idle screen. The key operation method includes: (7) a step of sequentially storing, into a storing unit, information including the type of a pressed input key as one piece of history data each time executing the pressed key input; and (8) a step of restoring an operation environment before interrupt based on the history data stored in the storing unit by pressing a specific key, when the operation is interrupted before outputting the desired result by executing the key input and the idle screen is undone.

According to the fifth aspect of the present invention, there is provided a key operation method for outputting a desired result by user's key operation from an idle screen. The key operation method includes: (9) a step of sequentially storing, into a storing unit, screen information after switching a screen as one piece of history data each time for pressing an input key for switching the screen; and (10) a step of restoring an operation environment before interrupt based on the history data stored by the storing unit by pressing a specific key, when the operation is interrupted before outputting the desired result by executing the key input and the idle screen is undone.

According to the sixth aspect of the present invention, there is provided a key operation method for outputting a desired result by user's key operation from an idle screen. The key operation method includes: (11) a step of sequentially storing, into a storing unit, screen information after switching a screen as one piece of history data each time for pressing an input key for switching the screen; and (12) a step of tracing operation environments one by one and restoring the operation environment before interrupt based on the history data stored in the storing unit each time for pressing a specific key, when the operation is interrupted before outputting the desired result by executing the key input and the idle screen is undone.

Further, the key operation method according to any one of the fourth to sixth aspects has: a step of assuming, as one operation environment, a series of the history data executed during displaying the idle screen every idle screen, setting the one operating environment as one piece of processing data, and storing a plurality of pieces of the processing data in the storing unit; a step of allowing the screen operation to select one of the plurality of pieces of the stored processing data stored in the storing unit; and a step of restoring the operation environment based on the selected processing data.

Furthermore, in the key operation method according to the fifth or sixth aspect, the history data includes character information and/or number information as a key input.

In addition, in the key operation method according to the fourth aspect, the history data includes text data which is made by a key input.

In addition, in the key operation method according to any one of the fourth to sixth aspects, the history data includes image data.

### BRIEF DESCRIPTION OF THE DRAWINGS

These and other aspects, features and advantages of the invention will become more fully apparent from the following detailed description taken in conjunction with accompanying drawings. In the drawings:
FIG. 1 is a block diagram showing the structure of an electronic circuit system of a mobile terminal according to the first, second, or third embodiment of the present invention;
FIG. 2 is a flowchart showing the flow of a system for storing a key operation environment in the mobile terminal according to the first or second embodiment;
FIG. 3 is a diagram showing an image of a display screen indicating the flow of an operation in the mobile terminal according to the first or second embodiment;
FIG. 4 is a diagram showing a continuous image of FIG. 3;
FIG. 5 is a flowchart showing the flow of a system for storing a key operation environment in the mobile terminal according to the third embodiment;
FIG. 6 is a diagram showing an image of a display screen indicating the flow of an operation in the mobile terminal according to the third embodiment;
FIG. 7 is a diagram showing a continuous image of FIG. 6; and
FIG. 8 is a diagram showing a continuous image of FIG. 7.

### DETAILED DESCRIPTION OF THE EMBODIMENTS

Next, the first embodiment of the present invention will be described in detail with reference to the drawings.

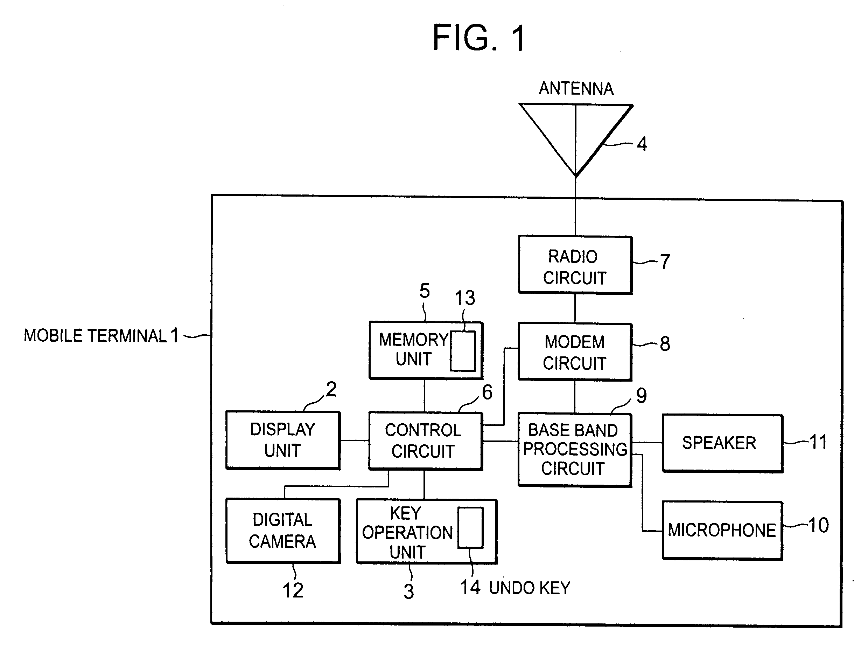

FIG. 1 is a block diagram showing the structure of an electric circuit system of a mobile terminal such as a mobile phone or a PDA (Personal Digital Assistant).

Referring to FIG. 1, a mobile terminal 1 includes: a display unit 2; a key operation unit 3; an antenna 4; a memory unit 5; a control circuit 6; a radio circuit 7; a modem circuit 8; a base band processing circuit 9; a microphone 10; a speaker 11; and a digital camera 12.

The memory unit 5 stores various data including a system program necessary for the operation and control of the mobile terminal 1 and a phone book. An operation environment storing unit 13 is assigned to the memory unit 5. The operation environment storing unit 13 stores the contents for sequentially storing the operation and processing in an operating process of the mobile terminal 1. Therefore, preferably, the operation environment storing unit 13 is an FIFO (First In First Out) system.

The key operation unit 3 has various keys including an undo key 14. The key operation unit 3 calls up various functions in the mobile terminal 1 in accordance with a key input under the control of the control circuit 6. Further, the key operation unit 3 allows the user to input an instruction of the operation on the function called-up by the key operation via the display unit 2, and the operation result is displayed on the display unit 2.

By pressing the undo key 14 in the key operation unit 3, the control circuit 6 executes restoration processing of the operation.

The control circuit 6 operates under the program control of a CPU (Central Processor Unit) (not shown). That is, the control circuit 6 executes various programs stored in the memory unit 5, and controlls the entire mobile terminal 1 including a series of reception and transmission processing.

The radio circuit 7 performs filtering processing of a reception signal from the antenna 4, amplifies a transmission signal, and outputs the amplification signal to the antenna 4.

The modem circuit 8 performs RF (Radio Frequency) processing of the reception signal, demodulates it, and converts the demodulation signal into a reception base band signal. The modem circuit 8 modulates a transmission base band signal, converts the modulation signal into the transmission signal, and transmits the conversion signal to the radio circuit 7.

The base band processing circuit 9 decodes the reception base band signal from the modem circuit 8, generates a voice signal, output the voice signal to the speaker 11, and plays voice. Among the reception base band signals from the modem circuit 8 in the base band processing circuit 9, data such as an image or e-mail excluding the voice is read by the control circuit 6 and the read data is outputted onto the display unit 2 and the memory unit 5. Further, the base band processing circuit 9 encodes the voice inputted from the microphone 10 and generates the transmission base band signals. The transmission data excluding the voice is supplied from the control circuit 6, is subjected to necessary processing, and is outputted to the modem circuit 8 via the base band processing circuit 9.

The digital camera 12 is controlled by the control circuit 6 and the data in the digital camera 12 is recorded to the memory unit 5.

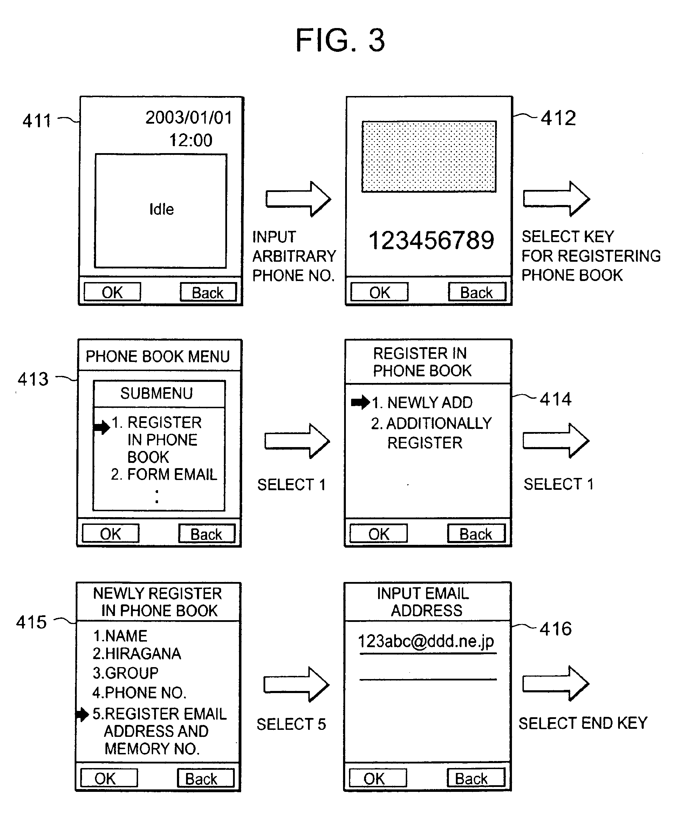

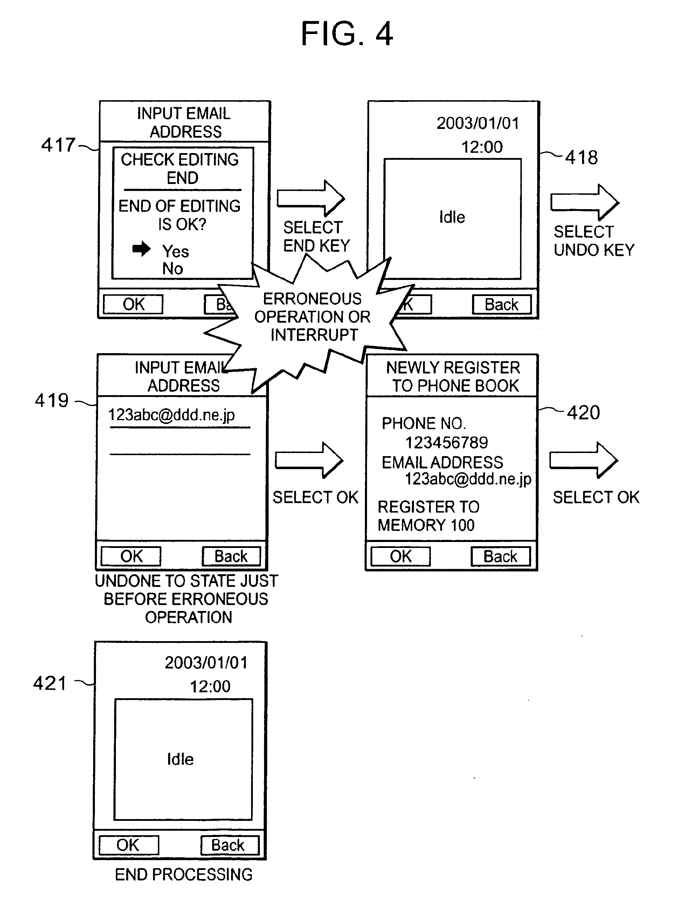

FIGs. 3 and 4 are flowcharts showing the flow of temporarily storing processing of a system for temporarily storing the operation environment.

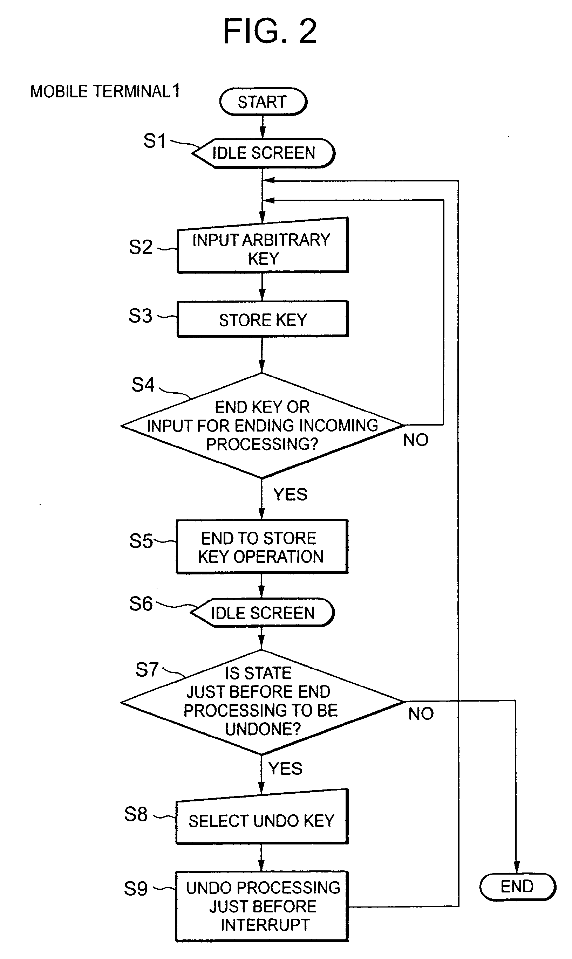

Next, a detailed description is given of the entire operation with reference to FIG. 2 according to the first embodiment of the present invention.

The user presses an arbitrary key in the key operation unit 3 from an idle screen (step S1 in FIG. 2) (step S2 in FIG. 2). In the case of any key input from the idle screen, the control circuit 6 stores, as history data, the type of input key and the number of operating times (normally, one time) in a temporarily storing area of the operation environment storing unit 13 (step S3 in FIG. 2). The operation for inputting the data by the key in this case includes operations for inputting the data by the keys (indicated by a character, number, and image) displayed on the screen of the display unit 2 as well as the operation for inputting the data by the key on the key operation unit 3. Therefore, in the case of inputting the data by the key displayed on the screen, the type of input key is identification information which is previously assigned to the operation screen.

That is, in the temporarily storing area of the operation environment storing unit 13, the control circuit 6 stores a series of history data that is obtained by storing the type of input key and the number of operating times in the order of inputting the data by the key. The pressed key in this case is a key except for the key for the end processing among the keys displayed on the screen and the keys of the key operation unit 3.

Next, the control circuit 6 determines whether or not the key for continuously executing the input processing is pressed, whether or not the key for executing the end processing is pressed, and whether or not the interrupt processing such as the incoming processing is generated (step S4 in FIG. 2). When the key for executing the end processing is pressed or when the interrupt processing is generated, the control circuit 6 ends the processing for sequentially storing the history data in the temporarily storing area of the operation environment storing unit 13 (step S5 in FIG. 2). In this case, the control circuit 6 collects, as processing data of one operation environment, the series of history data stored in the temporarily storing area of the operation environment storing unit 13, and registers again the processing data collected in a history area of the operation environment storing unit 13. Therefore, the history area of the operation environment storing unit 13 is preferably the FIFO system. After that, the control circuit 6 clears the temporarily storing area of the operation environment storing unit 13.

Further, the control circuit 6 executes the processing based on the pressing operation of a key for executing the end processing or interrupt processing and then returns to the idle screen (step S6 in FIG. 2).

If the key for executing the end processing is not pressed or if the interrupt processing is not generated, the control circuit 6 continuously executes the next operation for inputting the data by the key (step S2 in FIG. 2) and stores, similarly to the previous time, the type of input key and the number of operating times in a temporarily storing area of the operation environment storing unit 13(step S3 in FIG. 2). That is, if the key for executing the end processing is not pressed or if the interrupt processing is not generated, the control circuit 2 repeats the sequence of steps S2 to S4 in FIG. 2 so as to execute the processing.

Here, when the interrupt processing is generated (step S4 in FIG. 2), the control circuit 6 prompts the selection of undo processing to the user when the interrupt processing ends (step S7 in FIG. 2). Preferably, it is checked and displayed on the display unit 2 whether or not the continuous processing is called up. However, according to the present invention, only an undo key is pressed without the display operation enables the undo of the last state of the interrupt operation. In this case, the control circuit 6 detects the input of the undo key 14 (step S8 in FIG. 2) and then restores the last state just before the interrupt operation by reading the history data from the operation environment unit 13.

That is, in the processing, the control circuit 6 sequentially reads the history data (type of input key and the number of operating times) stored in the history area of the operation environment storing unit 13 in the order of the old history data, and sequentially restores the operation environment using the key which was inputted from the key operation unit 3. As mentioned above, the control circuit 6 continuously restores the operation environment until reading the history data of the operation for inputting the data by the key which is stored just before the interrupt processing, displays the screen on the display unit 2 indicating the input contents just before the interrupt, and ends the processing. Thus, the control circuit 6 undoes the processing in the state just before the interrupt (stepS9 in FIG. 2). In the restoration processing of the input contents just before the interrupt from the old history data, the control circuit 6 sequentially does not display the screen to be restored in the halfway but displays, on the display unit 2, the screen (just before the interrupt) which is outputted upon executing the restoration processing using the final history data.

In the description, the temporarily storing area and the history area are assigned to the operation environment storing unit 13. However, only the history area may be assigned without the temporarily storing area.

Next, a description is given of an example in which the user registers the phone number and the e-mail address in the phone book assigned to the memory unit 5. FIGs. 3 and 4 show examples of a series of sequence in which the control circuit 6 executes the processing for registering the phone number and the e-mail address in the phone book by indicating the transition of screens to be displayed on the display unit 2.

First, the user inputs an arbitrary phone number (123456789) by operating the key operation unit 3 from the idle screen (screen 411 in FIG. 4) (screen 412). Based on the operation of the key input from the idle screen, the control circuit 6 reads a screen for inputting the phone number that is previously stored in the memory unit 5, and displays the read screen onto the display unit 2. In this case, the control circuit 6 starts to store the contents (the type and the number of operating times) of the input key into the temporarily storing area of the operation environment storing unit 13 in accordance with the phone numbers sequentially inputted. Therefore, the type of key inputted as the phone number and the number of operating times are stored, as one piece of the history data, in the temporarily storing area of the operation environment storing unit 13.

As mentioned above, upon pressing the input key displayed on the screen or the input key of the key operation unit 3, the control circuit 6 sequentially stores the type of input key pressed and the number of operating times in the temporarily storing area of the operation environment storing unit 13. Since the processing is similar to the above-mentioned one in the following, the processing for storing the history data by the control circuit 6 is not described.

In order to register the inputted phone number in the phone book, the user selects the key for executing the phone book registration processing (screen 413), and selects the key for newly executing the phone book registration processing (screen 414). Next, the control circuit 6 executes processing for registering the e-mail address to the phone book which is registered by the user (screens 415 and 416).

Here, when the user erroneously presses the end key during inputting the e-mail address, the control circuit 6 displays a checking message to the display unit 2 (screen 417 in FIG. 4). Here, if the user selects "No" on the screen 417, he can continue the processing for registering the e-mail address. However, when the user erroneously selects "Yes" or the end key, the control circuit 6 cancels the input contents and returns the screen to the idle screen (screen 418). In this case, the user presses the end key and therefore information on the screen 418 is not stored in the temporarily storing area of the operation environment storing unit 13.

As mentioned above, the control circuit 6 collects, as data of one operation environment (one piece of processing data), the series of history data which is sequentially stored in the temporarily storing area of the operation environment storing unit 13 from the previous idle screen to the current idle screen, and stores the collected data to the history area. After that, the control circuit 6 clears the temporarily storing area of the operation environment storing unit 13.

The user presses the undo key 14 in the key operation unit 3 or call key and then the control circuit 6 undoes a screen 416 just before the interrupt by sequentially restoring, in the order of the old history data, an input sequence based on the series of history data in the processing data, which is stored in the history area of the operation environment storing unit 13. That is, the control circuit 6 determines, as the pressed input key, the type of input key and the number of operating times as the series of history data in the processing data stored in the history data in the operation environment storing unit 13, each time for sequentially reading the oldest to latest history data. In this case, the control circuit 6 determines the pressed input key based on the read type of input key and the read number of operating times (e.g., if a key "5" is stored as one operating-time, it is determined that the key "5" is pressed once). The control circuit 6 restores the input sequence from the old history data, thereby undoing the processing in the state just before the screen 417 for the checking message (screen 419). After undoing the screen for inputting the e-mail address, the user restarts to register the data in the phone book by inputting the e-mail address and selects "OK" on a screen 420. Then, the control circuit 6 registers the data in the phone book to the phone book in the memory unit 5 and ends the processing (screens 420 and 421). In this case, the series of history data is data having the key input contents which are inputted just before the interrupt from the previous idle state.

The contents stored in the operation environment storing unit 13 are collected and are registered again as the processing data of one operation environment each time for returning to the idle screen. Preferably, the operation environment storing unit 13 is the FIFO system which erases the old processing data in accordance with the collection and re-registration.

Next, the second embodiment of the present invention will be described with reference to the drawings.

The structure of a mobile terminal according to the second embodiment has the same as that according to the first embodiment and, however, the operation of the control circuit 6 according to the second embodiment is different from that according to the first embodiment. That is, according to the first embodiment, the control circuit 6 undoes the state just before the interrupt by sequentially restoring the input sequence from the old history data based on the history data stored in the operation environment storing unit 13. However, according to the second embodiment, the control circuit 6 undoes the state just before the interrupt by restoring the screen information which is stored before interrupting the processing for operation for inputting the data by the key, unlike the first embodiment.

Next, a detailed description is given of the entire operation with reference to FIG. 2 according to the second embodiment of the present invention.

The user presses an arbitrary key in the key operation unit 3 from the idle screen (step S1 in FIG. 2) (step S2 in FIG. 2). In the case of any key input from the idle screen, the control circuit 6 displays the screen corresponding to the key input. Further, in the case of the input of the key for switching the screen, the control circuit 6 stores, as history data, the screen information after switching the screen in the temporarily storing area of the operation environment storing unit 13 (step S3 in FIG. 2). The operation for inputting the data by the key in this case includes operations for inputting the data by keys (indicated by a character, number, and image) displayed on the screen of the display unit 2.

When the operation for inputting the data by the key is performed without switching the screen in step S2 (e.g., operation for inputting the data by the key to prompt the phone number input and the e-mail address input), the control circuit 6 additionally displays the input data of the input key onto the screen which is currently displayed, and adds the input data to the screen information which is finally stored in the temporarily storing area. Further, the screen information displayed on the display unit 2 as the history data in the temporarily storing area is stored by inputting the key for switching the screen, except for the key for the end processing among the keys displayed on the screen and the keys of the key operation unit 3.

Next, the control circuit 6 determines whether or not the key for continuously executing the input is pressed, whether or not the end key indicating the end processing is inputted, and whether or not the interrupt processing such as the incoming processing is generated (step S4 in FIG. 2). When the key for executing the end processing is pressed or when the interrupt processing is generated, the control circuit 6 ends the processing for sequentially storing the history data in the temporarily storing area of the operation environment storing unit 13 (step S5 in FIG. 2). In this case, the control circuit 6 collects, as processing data of one operation environment, the series of history data stored in the temporarily storing area of the operation environment storing unit 13, and registers again the processing data collected in the history area of the operation environment storing unit 13. Preferably, the history area of the operation environment storing unit 13 is the FIFO system. After that, the control circuit 6 clears the temporarily storing area of the operation environment storing unit 13.

Further, the control circuit 6 executes the processing based on the pressing operation of the key for executing the end processing or interrupt processing and then returns to the idle screen (step S6 in FIG. 2).

If the key for executing the end processing is not pressed or if the interrupt processing is not generated, the control circuit 6 continuously executes the next operation inputting the data by the key (step S2 in FIG. 2).

If the operation for inputting the data by the key is not determined as the key for switching the screen in step S2, the control circuit 6 displays the data corresponding to the operation for inputting the data by the key on the display screen similarly to the previous time and adds the data to the screen information that is finally stored in the temporarily storing area. If the operation for inputting the data by the key is determined as the operation for inputting the data by the key in accordance with the screen switching in step S2, the control circuit 6 displays the screen information on the display unit 2 corresponding to the operation for inputting the data by the key so as to switch the screen corresponding to the operation for inputting the data by the key and stores the screen information after switching the display screen (step S3 in FIG. 2). That is, if the key for executing the end processing is not pressed or if the interrupt processing is not generated, the control circuit 6 repeats the sequence of steps S2 to S4 in FIG. 2 so as to execute the processing.

Here, when the interrupt processing is generated (step S4 in FIG. 2), the control circuit 6 prompts the selection of the undo processing to the user when the interrupt processing ends (step S7 in FIG. 2). In this case, preferably, it is checked and is displayed on the display unit 2 whether or not the continuous processing is called up. However, according to the present invention, only the undo key is pressed without the display operation enables the undo of the state just before the interrupt. In this case, the control circuit 6 detects the input of the undo key 14 (step S8 in FIG. 2) and then restores the state just before the interrupt by reading the history data from the operation environment unit 13.

That is, in the processing, the control circuit 6 sequentially reads the history data (screen information) that is finally stored in the history area of the operation environment storing unit 13 in the order of the old history data. Further, the control circuit 6 undoes the processing just before the state by displaying and restoring the screen as the input contents just before the processing on the display unit 2 based on the read history data (step S9 in FIG. 2). In this case, the control circuit 6 displays the screen information read from the history area on the display unit 2.

In the above description, the temporarily storing area and the history area are assigned to the operation environment storing unit 13. However, only the history area may be assigned without the temporarily storing area.

Next, a description is given of an example in which the user registers the phone number and the e-mail address in the phone book assigned to the memory unit 5. FIGs. 3 and 4 show examples of a series of sequence in which the control circuit 6 executes the processing for registering the phone number and the e-mail address in the phone book by indicating the transition of screens to be displayed on the display unit 2.

First, the user inputs an arbitrary phone number (123456789) by operating the key operation unit 3 from the idle screen (screen 411 in FIG. 4) (screen 412). Based on the operation for inputting the data by the key input from the idle screen, the control circuit 6 reads a screen for inputting the phone number that is previously stored in the memory unit 5, and displays the read screen onto the display unit 2. Further, the control circuit 6 stores the screen information for inputting the phone number displayed in the temporarily storing area of the operation environment storing unit 13. Then, the control circuit 6 displays the contents of the input key in accordance with the phone number on the input screen for inputting the phone number and starts to store the contents, as a part of the screen information for inputting the phone number, into the temporarily storing area of the operation environment storing unit 13. That is, the inputted phone number is added to the screen information for inputting the phone number. Therefore, the state of the screen 412 is stored as one piece of the history data in the temporarily storing area of the operation environment storing unit 13.

As mentioned above, upon pressing the input key displayed on the screen or the input key of the key operation unit 3, the control circuit 6 sequentially stores the input data displaying on the screen, as a part of the screen information, into the temporarily storing area of the operation environment storing unit 13. Since the processing is similar to the above-mentioned processing in the following, the processing for storing one piece of history data (one piece of the screen information) by the control circuit 6 is not described.

In order to register the inputted phone number in the phone book, the user selects the key for executing the processing for registering the phone number (screen 413), and selects the key for newly executing the processing for registering the phone number (screen 414). Next, the processing for registering the e-mail address is executed for the phone number registered by the user (screens 415 and 416). In this case, the history data (screen information) on the screens 413 to 416 is stored in the temporarily storing area of the operation environment storing unit 13 (screens 415 and 416).

Here, when the user erroneously presses the key for executing the key for executing the end processing during inputting the e-mail address, the control circuit 6 displays the checking message on the display unit 2 (screen 417 in FIG. 4). Here, if the user selects "No" on the screen 417, he can continue the processing for registering the e-mail address. However, when the user erroneously selects "Yes" or the key for executing the end processing, the control circuit 6 cancels the input contents and returns to the idle screen (screen 418). In this case, the information on the screen 418 is not stored in the temporarily storing area of the operation environment storing unit 13.

As mentioned above, on the idle screen, the control circuit 6 collects, as data of one operation environment data (one piece of processing data), a series of history data which is sequentially stored in the temporarily storing area of the operation environment storing unit 13 from the previous idle screen to the current idle screen, and stores again the collected data to the history area of the operation environment storing unit 13. Therefore, preferably, the operation environment storing unit 13 is the FIFO system which erases the old processing data in accordance with the collection and storage. After that, the control circuit 6 clears the temporarily storing area of the operation environment storing unit 13.

The user presses the undo key 14 in the key operation unit 3 or call key and then the control circuit 6 restores the screen 416 just before the interrupt by reading the screen information that is finally stored in the history area of the operation environment storing unit 13 and by displaying it on the display unit 2. That is, the control circuit 6 undoes the processing just before the screen 417 for the checking message (screen 419). After undoing the screen for inputting the e-mail address, the user restarts to register the data in the phone book by inputting the e-mail address and selects "OK" on the screen 420. Then, the control circuit 6 registers the data of the phone book into the phone book of the memory unit 5 and ends the processing (screens 420 and 421).

Next, the third embodiment of the present invention will be described with reference to the drawings.

According to third embodiment, the structure of a mobile terminal is the same as that shown in FIG. 1 according to the first and the second embodiments. The operation of the control circuit 6 is different from that according to the second embodiment. That is, the control circuit 6 according to the second embodiment performs only the operation for undoing the state just before the interrupt. However, the control circuit 6 according to third embodiment traces, one by one, steps of the operations for inputting the data by the keys from the state just before the interrupt each time when the user presses the undo key 14.

That is, the processing of the control circuit 6 is interrupted and the state transits to the idle screen. After that, when the user desires to continue the input operation before the interrupt, the user presses the undo key 14 once and thus the control circuit 6 undoes the one-previous processing state. If the user presses the undo key 14 twice, the control circuit 6 undoes the two-previous processing state. After that, the user similarly presses the undo key 14 N times and thus the control circuit 6 executes an operation for undoing the N-previous processing state.

As mentioned above, the control circuit 6 calls up the processing history every pressing operation of the undo key 14, thereby undoing the desired state from the idle screen.

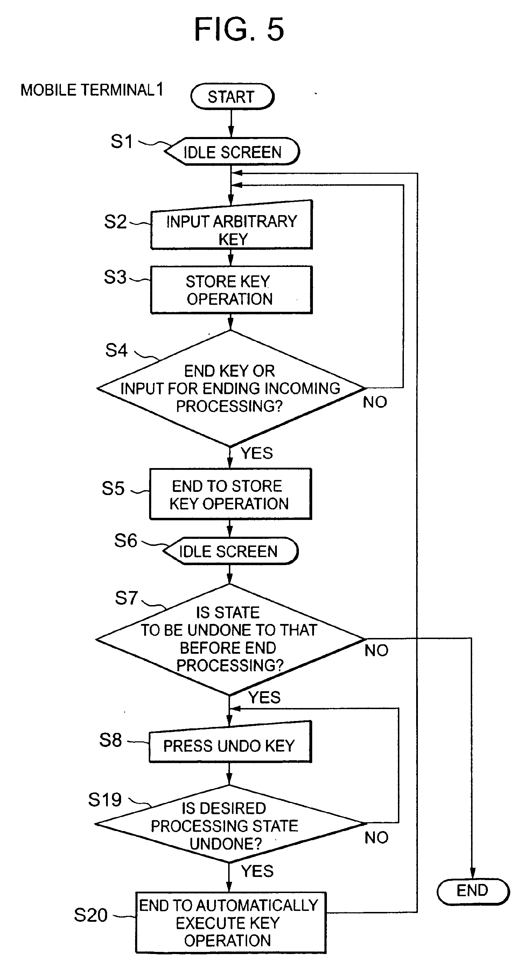

Next, a detailed description is given of the entire operation with reference to FIG. 5 according to third embodiment.

First, the user presses an arbitrary key from the idle screen (step S1 in FIG. 5) (step S2 in FIG. 5). In the case of any operation for inputting the data by the key from the idle screen, the control circuit 6 displays the screen corresponding to the operation for inputting the key. Further, if the operation for inputting the data by the key is the key for switching the screen, the control circuit 6 stores, as the history data, the screen information after switching the screen into the temporarily storing area of the operation environment storing unit 13 (step S3 in FIG. 5). The operation for inputting the data by the key in this case includes operations for inputting the data by keys (indicated by a character, number, and image) displayed on the screen of the display unit 2.

Upon performing the operation for inputting the data by the key without switching the screen (e.g., upon performing the operation for inputting the data by the key for prompting the phone number input and the e-mail address input) in step S2, the control circuit 6 additionally displays the input data of the input key onto the screen which is currently displayed, and adds the input data to the screen information which is finally stored in the temporarily storing area. Further, the screen information displayed on the display unit 2 as one piece of history data in the temporarily storing area is stored by inputting the data by the key for switching the screen, except for the key for the end processing among the keys displayed on the screen and the keys of the key operation unit 3.

The operation sequence until pressing the undo key 14 (steps S4 to S8 in FIG. 5) is the same as the operation sequence (steps S4 to S8 in FIG. 2) according to the second embodiment and is not described here.

After that, when undo key 14 is pressed on the idle screen, the control circuit 6 reads the last history data (screen information) stored in the history area of the operation environment storing unit 13, and displays the read history data on the display unit 2. That is, the control circuit 6 undoes the one-previous processing state and allows the user to check whether or not the desired processing state is undone by displaying the undone screen on the display unit 2 (step S19 in FIG. 5). When the user determines that the processing state is not undone, the undo key 14 is pressed again (S8 in FIG. 5). Then, the one-previous history data of the same screen information which is currently displayed is read from the history area of the operation environment storing unit 13, and the read history data (screen information) is displayed on the display unit 2. That is, the control circuit 6 undoes the one-previous state from the timing for determining that the processing state is not undone.

After that, until undoing the screen in the desired processing state, the user continuously presses the undo key 14. If the screen in the desired processing state is undone and the user interrupts the processing, the control circuit 6 ends the processing (steps S9 and S10 in FIG. 5).

Next, an example is given of registering the phone number and e-mail address in the phone book by the user according to third embodiment, similarly to the second embodiment.

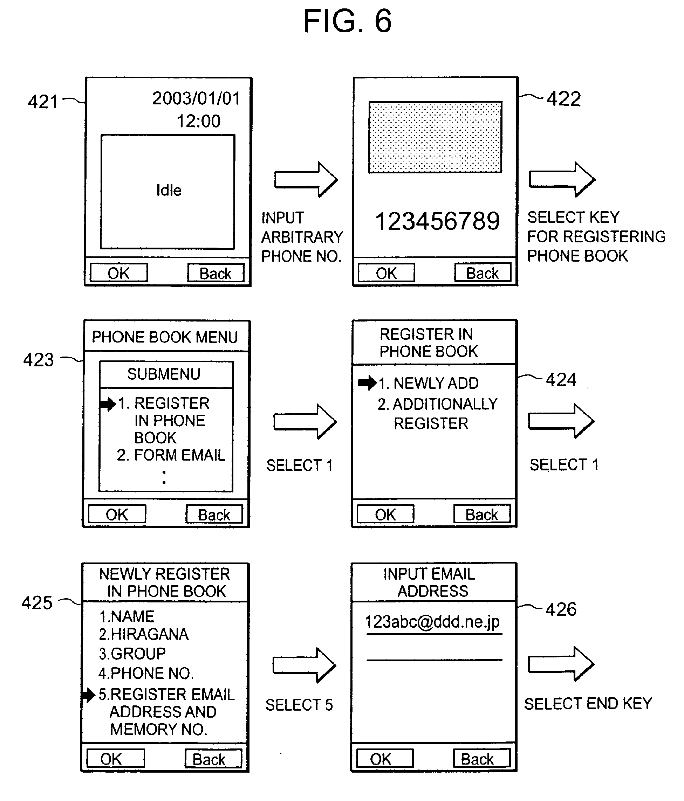

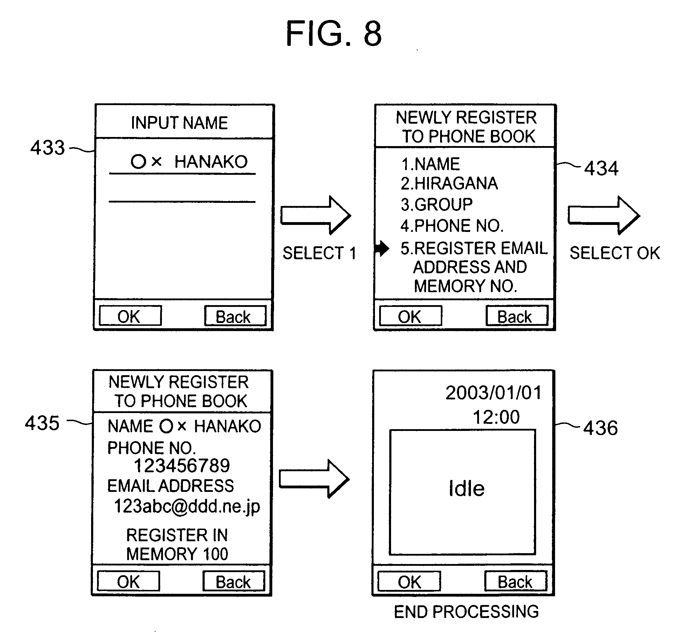

FIGs. 6 to 8 show a series of the sequence of executing the processing for registering the phone number and e-mail address in the phone book by the control circuit 6 by indicating the transition of the screens displayed on the display unit 2 by the control circuit 6.

First, the user inputs an arbitrary phone number (123456789) by operating the key operation unit 3 from the idle screen (screen 421 in FIG. 6) (screen 422). By the operation for inputting the data by the key from the idle screen, the control circuit 6 reads the screen for inputting the phone number that is previously stored in the memory unit 5, and displays the read screen on the display unit 2. Further, the control circuit 6 stores the screen information for inputting the phone number displayed in the temporarily storing area of the operation environment storing unit 13. Then, the control circuit 6 displays the contents of the input key on the screen for inputting the phone number in accordance with the phone number and starts to store the contents, as a part of the screen information for inputting the phone number, into the temporarily storing area of the operation environment storing unit 13. That is, the input phone number is added to the screen information for inputting the phone number. Therefore, the state of the screen 422 is stored as one piece of the history data in the temporarily storing area of the operation environment storing unit 13.

As mentioned above, upon pressing the input key displayed on the screen or input key of the key operation unit 3, the control circuit 6 sequentially stores the input data displaying on the screen, as a part of the screen information, into the temporarily storing area of the operation environment storing unit 13. Since the processing is similar to the above-mentioned one in the following, the processing for storing one piece of the history data (one piece of the screen information) by the control circuit 6 is not described.

In order to newly register the input phone number in the phone book in the memory unit 5, the user selects the key for executing the processing for registering the phone number in the phone book (screen 423), and selects the key for executing the processing for newly registering the phone number (screen 424). In this case, the user selects the key for executing the processing for registering the phone number in the phone book and thus the control circuit 6 performs the processing for registering the phone number in the phone book.

Next, the control circuit 6 performs the registering processing, displays the screen for newly registering the phone number in the phone book on the display unit 2 and, then, executes the processing for registering the e-mail address in the phone book registered by the user in accordance with the display screen (screens 425 and 426). In this case, the history data (screen information) on the screens 423 to 426 is stored into the temporarily storing area of the operation environment storing unit 13 every screen.

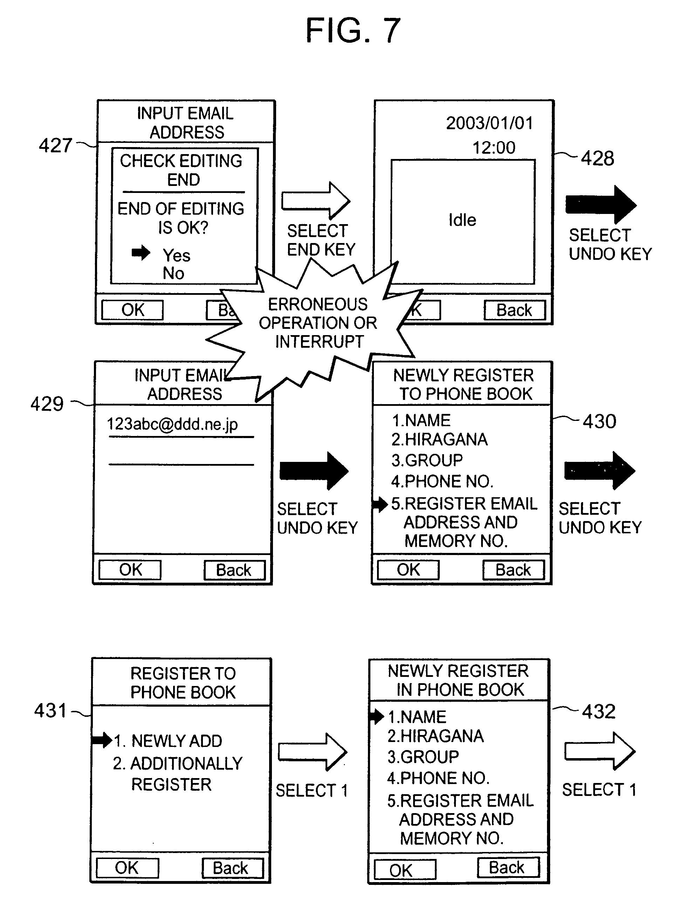

When the user erroneously presses the key for executing the end processing during inputting the e-mail address, the control circuit 6 displays, on the display unit 2, a checking message indicating whether or not the processing stops (screen 427 in FIG. 7).

Here, if the user selects "No" on the screen 427, he can continue the processing for registering the e-mail address. However, when the user erroneously selects "Yes" or the key for executing the end processing, the control circuit 6 undoes the idle screen (screen 428). In this case, the information on the screen 428 is not stored in the temporarily storing area of the operation environment storing unit 13.

As mentioned above, on the idle screen, the control circuit 6 collects, as data of one operation environment (one piece of processing data), a series of history data which is sequentially stored in the temporarily storing area of the operation environment storing unit 13 from the previous idle screen to the current idle screen, and stores again the collected data into the history area of the operation environment storing unit 13. Preferably, the history area of the operation environment storing unit 13 is the FIFO system which erases the old processing data. After that, the control circuit 6 clears the temporarily storing area of the operation environment storing unit 13.

However, when the user continuously registers the data in the phone book, the user presses the undo key 14 from the idle screen. Then, the control circuit 6 reads the history data (screen information) finally stored in the history area of the operation environment storing unit 13 in the memory unit 5 and displays the read data on the display unit 2, thereby restoring the screen 426 just before the interrupt. That is, the control circuit 6 undoes the state just before the interrupt by inversely tracing the processing states.

When the user registers, on the screen 428, data such as the name as well as the phone number and e-mail address which are being registered, the user presses the undo key 14 once and thus the control circuit 6 undoes the corresponding screen for inputting the e-mail address (screen 429). After that, the user further presses the undo key 14 once and then the control circuit 6 undoes the screen for newly registering the phone book corresponding to the screen 425 (screen 430). Then, the user further presses the undo key 14 once and thus the control circuit 6 undoes the screen 431 for registering the phone book corresponding to the screen 424. That is, the user presses the undo key 14 three times on the screen 430, thereby undoing the screen displayed on the display unit 2 as the screen 431 for registering the phone number corresponding to the screen 424.

Then, the user may select "1. Name" (screen 432) and may input a desired name (screen 433).

The user completes the input of name and registers the data to the phone book on a screen 434 and thus the control circuit 6 stores, in the phone book of the memory unit 5, the phone number and e-mail address which are registered before the erroneous operation and the name which is inputted (screens 434 and 435). After that, the control circuit 6 returns the screen to the idle one and ends the processing (screen 436).

According to the first embodiment, the control circuit 6 collects the type of input key and the number of operating times in the operation environment storing unit 13. Further, the control circuit 6 may convert the input contents into text data and store the text data in addition to the storage of the type of input key and the number of operating times. When the user makes the document of the e-mail and incoming melody data, the control circuit 6 displays the input contents on the display unit 2 and stores, in the operation environment storing unit 13, the input contents as one piece of history data together with the type of input key and the number of operating times (steps S2 and S3 in FIG. 2). If the undo key 14 is pressed in step S8, the control circuit 6 restores the input sequence based on the contents of the operation for inputting the data by the key in the operation environment storing unit 13. The control circuit 6 restores the input sequence as mentioned above and thus displays the contents which are being made if the input contents are stored in the operation environment storing unit 13 in the undo state (step S8 and S9 in FIG. 2).

According to the second and third embodiments, the control circuit 6 collects the history of the screen information including the phone number or e-mail address in the operation environment storing unit 13. Further, the control circuit 6 may store the text data which is inputted as document as well as the phone number and e-mail address. In this case, when the user makes the document of e-mail and the incoming melody data, the control circuit 6 displays the input contents on the display unit 2 and adds the input contents to the screen information which is currently being displayed in the operation environment storing unit 13 similarly to the input of phone number, thus to store the input contents with the additional screen information as one piece of history data (steps S2 and S3 in FIGs. 2 and 5). If the undo key 14 is pressed in step S8, the control circuit 6 restores the input sequence based on the screen information stored in the operation environment storing unit 13. The control circuit 6 displays the contents which are being made on the display unit 2 by restoring the input sequence if the input contents are stored in the operation environment storing unit 13 in the undo state (steps S8 and S9 in FIGs. 2 and 5). That is, the control circuit 6 stores, in the operation environment storing unit 13, the screen information including the character information and number information which are inputted in the key operating process on the screen as one piece of history data.

According to the first to third embodiments, a plurality of pieces of processing data are stored in the operation environment storing unit 13 and therefore, upon pressing the undo key 14, the control circuit 6 may display the selecting screen for selecting the processing data and may perform the processing of the history data based on the processing data selected by the user.

Further, according to the first to third embodiments, not only the text data but also the image data in the digital camera 12 is previously stored in the operation environment storing unit 13 as one piece of history data before the registering operation. Consequently, the data erasure is prevented against the sudden interrupt.

As mentioned above, according to the first to third embodiments, the desired processing state can be undone because of storing the sequence of key operations or the history of screen information. Further, according to the first to third embodiments of the present invention, it is possible to undo the canceled processing due to the user's erroneous operation or interrupt processing of the incoming phone in the state just before the interrupt by the one-time key operation because of storing the sequence of key operations or the history of screen information. Therefore, according to the present invention, the previous operation effectively continues without the troublesomeness of repetition of the same sequence.

## Claims

1. A mobile terminal (1) for outputting a desired result by user's key operation on an idle screen, said mobile terminal (1) comprising:
screen input storing means for sequentially storing a screen information after switching a screen each time for pressing an input key for switching the screen;
key input storing means (5) for sequentially adding information including the type of a pressed input key into the screen information corresponding to the screen displaying as one piece of history data each time for executing the pressed key input; and
restoring means (6) for restoring an operation environment before interrupt based on the history data stored by said key input storing means (5), when the operation is interrupted before outputting the desired result by executing the key input, the screen returns to the idle screen, and then a specific key is pressed.

2. The mobile terminal (1) according to claim 1, wherein said restoring means (6) traces operation environments one by one and restores the operation environment before interrupt based on history data stored by said key input storing means (5) each time for pressing a specific key when the operation is interrupted before outputting the desired result by executing the key input and the screen returns to the idle screen.

3. The mobile terminal (1) according to claim 1, further comprising:
operation environment storing means for assuming, as one operation environment, a series of the history data executed between a previous idle screen and a present idle screen, setting the one operating environment as one piece of processing data, and storing a plurality of pieces of the processing data, whenever the screen returns to the idle screen,
wherein said restoring means (6) allows said operation environment storing means to select one of a plurality of pieces of the stored processing data and restores the operation environment based on the selected processing data.

4. The mobile terminal (1) according to claim 1, wherein the history data includes character information and/or number information as a key input.

5. The mobile terminal (1) according to claim 1, wherein the history data includes text data which is made by a key input.

6. The mobile terminal (1) according to claim 1, wherein the history data includes image data.

7. A key operation method for outputting a desired result by user's key operation on an idle screen, said key operation method comprising:
sequentially storing, into a storing unit, a screen information after switching a screen each time for pressing an input key for switching the screen;
sequentially adding, into the screen information corresponding to the screen displaying, information including the type of a pressed input key as one piece of history data each time executing the pressed key input;
sequentially storing, into a storing unit, screen information after switching a screen as one piece of history data each time for pressing an input key for switching the screen; and
restoring an operation environment before interrupt based on the history data stored in said storing unit by pressing a specific key, when the operation is interrupted before outputting the desired result by executing the key input and the screen returns to the idle screen.

8. The key operation method according to claim 7, said key operation method comprising:
tracing operation environments one by one and restoring the operation environment before interrupt based on the history data stored in said storing unit each time for pressing a specific key, when the operation is interrupted before outputting the desired result by executing the key input and the idle screen is undone.

9. The key operation method according to claim 7, said key operation method comprising:
assuming, as one operation environment, a series of the history data executed during, between a previous idle screen and a present idle screen, setting the one operating environment as one piece of processing data, and storing a plurality of pieces of the processing data in the storing unit, whenever the screen returns to the idle screen;
allowing the screen operation to select one of the plurality of pieces of the stored processing data stored in the storing unit; and
restoring the operation environment based on the selected processing data.

10. The key operation method according to claim 7, wherein the history data includes character information and/or number information as a key input.

11. The key operation method according to claim 7, wherein the history data includes text data which is made by a key input.

12. The key operation method according to claim 7, wherein the history data includes image data.
